# FASCICULE DE BREVET EUROPEEN

(11) **EP 2 647 217 B1**
(45) Date de publication et mention de la délivrance du brevet: **27.09.2017**
(21) Numéro de dépôt: 11797211.7
(22) Date de dépôt: 01.12.2011
(51) Int. Cl.: H04Q 3/68

(54) **RÉSEAU DE COMMUTATEURS ET CHARGE UTILE DE SATELLITE DE TÉLÉCOMMUNICATIONS COMPORTANT UN RÉSEAU DE COMMUTATEURS**
NETZWERK AUS SCHALTERN UND LADUNG EINES TELEKOMMUNIKATIONSSATELLITEN MIT EINEM NETZWERK AUS SCHALTERN
NETWORK OF SWITCHES AND PAYLOAD OF TELECOMMUNICATIONS SATELLITE COMPRISING A NETWORK OF SWITCHES

(30) Priorité: 02.12.2010 FR 1004693
(43) Date de publication de la demande: 09.10.2013
(73) Titulaire: Airbus Defence and Space SAS, 31402 Toulouse Cedex 4 (FR)
(72) Inventeur: NAKAD, Olivier, F-31400 Toulouse (FR)
(74) Mandataire: Ipside
(86) Numéro de dépôt international: PCT/EP2011/071572
(87) Numéro de publication internationale: WO 2012/072773

(56) Documents cités:
- EP-A1- 0 599 734
- EP-A1- 0 690 636
- EP-A1- 0 749 174
- EP-A1- 0 750 435
- DE-A1- 2 538 656
- DE-A1- 4 317 856
- FR-A1- 2 752 497
- FR-A1- 2 774 543
- FR-A1- 2 808 148

## Description

La présente invention concerne les réseaux de commutateurs comportant N accès d'entrée et M accès de sortie, adaptés à relier P (P ≤ N et P ≤ M) accès d'entrée choisis parmi les N accès d'entrée, à P accès de sortie choisis parmi les M accès de sortie.

Un tel réseau est par exemple divulgué dans le document EP 0 749 174 A1. De tels réseaux de commutateurs sont par exemple utilisés dans les charges utiles de satellites, notamment les satellites transparents de télécommunications, où ils sont généralement placés avant et/ou après des équipements tels que des transpondeurs.

En général, on utilise deux réseaux de commutateurs de part et d'autre des équipements : un réseau comportant N accès d'entrée et M accès de sortie avant les équipements, et un réseau inverse après lesdits équipements, c'est-à-dire le même réseau en inversant les accès d'entrée et les accès de sortie (soit M accès d'entrée et N accès de sortie). En effet, dans de tels réseaux de commutateurs, les accès d'entrée et de sortie sont en pratique interchangeables.

De tels réseaux de commutateurs, lorsqu'ils sont mis en oeuvre dans des satellites de télécommunications, sont adaptés à établir P canaux de communications parmi N canaux installés au moyen de P transpondeurs parmi M transpondeurs disponibles.

De tels réseaux de commutateurs permettent par exemple de faire face à des défaillances d'au maximum (M - P) transpondeurs (dans le cas où M est supérieur à N), en modifiant les chemins des P signaux d'entrée dans le réseau de sorte à les router uniquement vers des équipements en état de fonctionner.

De nos jours, les commutateurs utilisés dans les réseaux embarqués dans des satellites de télécommunications comportent quatre ports, et sont le plus souvent des commutateurs à trois états ou à quatre états (états qui sont plus généralement connus sous le nom de « positions »).

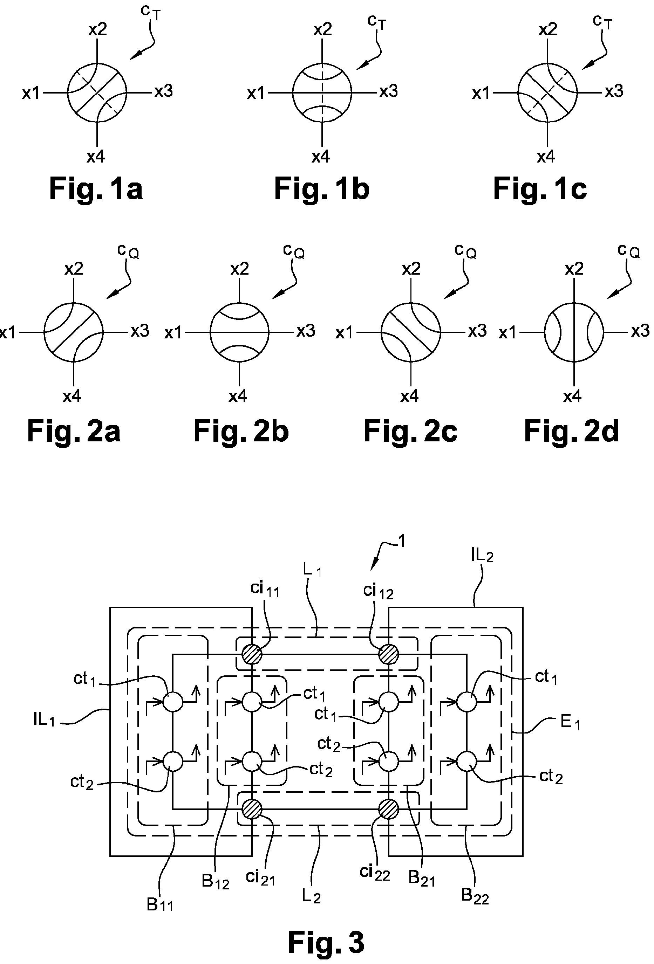

Les figures 1a, 1b et 1c représentent respectivement les trois états d'un commutateur C_{T} à trois états :
- un état dans lequel un premier port x1 est connecté à un deuxième port x2, et un troisième port x3 à un quatrième port x4 ;
- un état dans lequel le premier port x1 est connecté au troisième port x3, et le deuxième port x2 au quatrième port x4,
- un état dans lequel le premier port x1 est connecté au quatrième port x4, et le deuxième port x2 au troisième port x3.

Les figures 2a, 2b, 2c et 2d représentent respectivement les quatre états d'un commutateur C_{Q} à quatre états :
- un état dans lequel un premier port x1 est connecté à un deuxième port x2, et un troisième port x3 à un quatrième port x4 ;
- une position dans laquelle le premier port x1 est connecté au troisième port x3 ;
- un état dans lequel le premier port x1 est connecté au quatrième port x4, et le deuxième port x2 au troisième port x3 ;
- un état dans lequel le deuxième port x2 est connecté au quatrième port x4.

On comprend donc qu'en agissant sur l'état de chaque commutateur, on peut modifier les ports effectivement connectés entre eux de chaque commutateur, et par conséquent modifier le choix des P accès d'entrée et des P accès de sortie qui sont mutuellement et individuellement reliés.

Dans le domaine des satellites de télécommunications, la conception d'un réseau de commutateurs nécessite une étude complexe visant à déterminer à la fois une configuration logique (c'est-à-dire le nombre de commutateurs et lesquels parmi ces commutateurs sont connectés entre eux), et une implantation matérielle (c'est-à-dire l'agencement final des commutateurs et des éléments de liaison entre commutateurs), qui satisfassent aux contraintes opérationnelles, notamment d'encombrement réduit.

La conception des réseaux de commutateurs est de plus en plus complexe du fait notamment de l'augmentation :
- du nombre de transpondeurs installés dans un même satellite, certains desdits transpondeurs étant des transpondeurs redondants prévus pour faire face à d'éventuelles défaillances,
- de la flexibilité requise pour ces réseaux, c'est-à-dire de leur faculté à établir simultanément de nombreuses combinaisons de chemins différents entre leurs accès d'entrée et leurs accès de sortie.

On comprend également que les contraintes d'encombrement et de flexibilité sont antagonistes, et le résultat de l'étude de conception sera généralement un compromis entre ces deux contraintes.

On connaît de la demande de brevet EP 0876069 un réseau matriciel de commutateurs, inspiré des réseaux de commutateurs mis en oeuvre dans les télécommunications terrestres. Ce réseau de commutateurs peut être construit de façon modulaire.

Toutefois, le réseau de commutateurs décrit dans la demande de brevet EP 0876069 présente l'inconvénient d'avoir un nombre de commutateurs qui augmente rapidement lorsqu'on augmente le nombre d'accès d'entrée et d'accès de sortie. Outre l'encombrement de ce réseau, le nombre moyen de commutateurs traversés pour établir les P chemins dans le réseau va également augmenter. En pratique, il est important de réduire le nombre moyen de commutateurs traversés car la traversée de chaque commutateur par un signal s'accompagne d'une atténuation de ce signal.

La présente invention a pour objectif de proposer un réseau de commutateurs qui permette d'avoir une bonne flexibilité, tout en limitant le nombre de commutateurs nécessaires et le nombre moyen de commutateurs traversés, en particulier dans le cas de réseaux asymétriques, c'est-à-dire dont le nombre N d'accès d'entrée est différent du nombre M d'accès de sortie.

La présente invention a également pour objectif de proposer un réseau de commutateurs dont la configuration logique permette une implantation simple, dont la conception puisse bénéficier amplement des réalisations antérieures, et qui puisse être construit de façon modulaire.

La présente invention concerne tout d'abord un réseau de commutateurs comportant N accès d'entrée et M accès de sortie, chacun des commutateurs comportant quatre ports et les accès d'entrée et de sortie du réseau étant des ports de commutateurs, dits « commutateurs de connexion ». Le réseau de commutateurs selon l'invention comporte au moins un étage de commutateurs, chaque étage comportant :
- une paire de lignes de commutateurs dont les ports ne sont pas utilisés comme accès d'entrée ou de sortie du réseau, dits « commutateurs d'interconnexion », une ligne étant une suite de commutateurs d'interconnexion connectés entre eux,
- des bras transversaux reliant des commutateurs d'interconnexion de lignes différentes du même étage, un bras transversal étant constitué d'éléments distincts de ceux des autres bras transversaux de l'étage, un bras transversal comprenant au moins deux liens et un commutateur, dit « commutateur transversal »,

En outre, chaque étage du réseau comporte au moins deux commutateurs transversaux, de bras transversaux différents, qui sont utilisés comme commutateurs de connexion du réseau. De plus, au moins un commutateur d'interconnexion d'une ligne d'un étage est connecté à au moins un commutateur d'interconnexion de l'autre ligne de cet étage ou d'une ligne d'un autre étage du réseau, par un lien ne comportant pas de commutateur, dit « lien inter-lignes ».

Une telle configuration du réseau de commutateurs, comprenant au moins un tel étage de commutateurs, permet d'obtenir de bonnes propriétés à la fois en termes de flexibilité et de nombre de commutateurs traversés. Notamment, l'au moins un lien inter-lignes permet d'établir un chemin direct entre deux lignes du réseau sans traverser de commutateurs.

Plus on augmente le nombre de liens inter-lignes, plus on améliore la flexibilité offerte par le réseau de commutateurs.

Ainsi, dans un mode particulier de réalisation, chaque commutateur d'interconnexion d'au moins une ligne d'un étage est connecté, par un lien inter-lignes, à un commutateur d'interconnexion de l'autre ligne du même étage ou d'une autre ligne d'un autre étage du réseau.

Lorsque le réseau comporte au moins deux étages, tous les commutateurs d'interconnexion d'une ligne d'un étage sont avantageusement connectés à des commutateurs d'interconnexion respectifs d'une même autre ligne d'un autre étage du réseau.

En variante ou en alternative, lorsque le réseau comporte au moins deux étages, une ou plusieurs lignes de commutateurs d'interconnexion, distinctes desdits étages et dites « lignes intermédiaires », peuvent être prévues entre deux étages du réseau. Dans un tel cas, tous les commutateurs d'interconnexion d'une ligne d'un étage sont avantageusement connectés à des commutateurs d'interconnexion respectifs d'une même autre ligne d'un autre étage du réseau par l'intermédiaire de commutateurs d'interconnexion respectifs de ladite ligne intermédiaire.

De telles dispositions, selon lesquelles au moins deux lignes de commutateurs d'interconnexion sont alors prévues entre des bras transversaux appartenant à deux étages différents du réseau (une ligne de chaque réseau et éventuellement une ou plusieurs lignes intermédiaires), permettent d'améliorer les performances en termes de flexibilité et de robustesse aux défaillances d'équipements. Il a par ailleurs été constaté par les inventeurs que la présence d'au moins deux telles lignes de commutateurs d'interconnexion permet d'obtenir de bonnes performances y compris pour des réseaux dans lesquels le nombre N d'accès d'entrée est très différent du nombre M d'accès de sortie (par exemple 14 accès d'entrée et 28 accès de sortie).

De préférence, afin d'optimiser la flexibilité offerte par le réseau, chaque commutateur d'interconnexion de chaque ligne de chaque étage du réseau est connecté à un commutateur d'interconnexion d'une autre ligne de commutateurs d'interconnexion du réseau par un lien inter-lignes. Ladite autre ligne de commutateurs du réseau peut être soit l'autre ligne du même étage du réseau, soit une autre ligne d'un autre étage du réseau, soit, le cas échéant, une ligne intermédiaire du réseau.

Suivant d'autres modes particuliers de réalisation, le réseau de commutateurs comporte l'une ou plusieurs des caractéristiques suivantes, prises isolément ou suivant toutes les combinaisons techniquement possibles :
- tous les commutateurs d'interconnexion d'une ligne d'un étage sont reliés par des bras transversaux respectifs à des commutateurs d'interconnexion respectifs de l'autre ligne du même étage,
- chaque commutateur d'interconnexion d'une ligne d'un étage n'est relié, par un ou des bras transversaux, qu'à un autre commutateur d'interconnexion de l'autre ligne du même étage,
- tous les commutateurs de connexion du réseau sont des commutateurs transversaux dudit réseau,
- au moins un commutateur transversal de chaque bras transversal du réseau est un commutateur de connexion dudit réseau,
- chaque bras transversal d'au moins un étage comporte exactement deux commutateurs transversaux,
- au moins un commutateur transversal est connecté à un commutateur transversal d'un autre bras transversal du réseau par un lien ne comportant pas de commutateurs, dit « lien inter-bras ».
- au moins un port d'au moins un commutateur transversal n'est ni connecté à un autre commutateur du réseau, ni utilisé comme accès d'entrée ou accès de sortie dudit réseau,
- les commutateurs d'interconnexion placés aux extrémités d'au moins une ligne d'un étage sont connectés entre eux par un lien ne comportant pas de commutateurs, dit « lien intra-ligne »,
- les lignes de commutateurs d'interconnexion du réseau sont implantées sensiblement droites et sensiblement parallèles entre elles suivant une direction longitudinale du réseau,
- les bras transversaux sont implantés, entre les lignes du réseau, sensiblement droits et sensiblement parallèles suivant une direction transversale, non parallèle à la direction longitudinale, formant avec ladite direction longitudinale un angle préférentiellement droit.

La présente invention concerne également une charge utile de satellite de télécommunications comportant au moins un réseau de commutateurs selon l'un quelconque des modes de réalisation de l'invention. En outre, la présente invention concerne également un satellite de télécommunications embarquant une telle charge utile.

L'invention sera mieux comprise à la lecture de la description suivante, donnée à titre d'exemple nullement limitatif, et faite en se référant aux figures qui représentent :
- Figures 1 et 2 : déjà citées, des représentations de commutateurs à trois et quatre états, pouvant être mis en oeuvre dans l'invention,
- Figures 3 à 7 : des représentations schématiques d'exemples de réalisation d'un réseau de commutateurs selon l'invention.

La présente invention concerne un réseau de commutateurs comportant N accès d'entrée et M accès de sortie, adapté à connecter P (P ≤ N et P ≤ M) accès d'entrée choisis parmi les N accès d'entrée, à P accès de sortie choisis parmi les M accès de sortie.

La présente invention trouve une application particulièrement avantageuse, bien que nullement limitative, dans les systèmes de télécommunications par satellites.

La présente invention concerne les réseaux de commutateurs à quatre ports, notamment des commutateurs à trois ou quatre états tels que décrits en référence aux figures 1 et 2, ou tout autre type de commutateur à quatre ports adapté aux applications satellites. Rien n'exclut, suivant d'autres exemples, d'avoir des commutateurs à deux états.

Un tel réseau permet de router P signaux, injectés dans le réseau par P accès d'entrée, vers P accès de sortie.

L'invention est applicable à de nombreux types de signaux, en particulier des signaux électriques ou des ondes électromagnétiques. L'invention n'est pas limitée à une bande particulière de fréquences, mais peut être mise en oeuvre dans différentes bandes de fréquences, notamment les bandes de fréquences traditionnellement utilisées dans les systèmes de télécommunications par satellites (bandes Ku, Ka, C, etc.).

Un tel réseau est principalement constitué de commutateurs dont les ports sont connectés par des éléments de liaison. Suivant le type des signaux routés, les éléments de liaison seront par exemple des guides d'ondes, des câbles coaxiaux, etc.

Dans la suite de la description, on désigne par « chemin » du réseau le trajet établi en choisissant l'état de chaque commutateur du réseau (c'est à dire pour chaque commutateur, les ports qui sont connectés entre eux), trajet qui sera suivi par un signal entre un accès d'entrée et un accès de sortie.

On désigne également par « commutateur de connexion » un commutateur dont au moins un port est utilisé comme accès d'entrée ou de sortie du réseau, c'est-à-dire au moins un port non connecté à un autre commutateur du réseau et par lequel un signal doit être injecté dans le réseau ou doit être prélevé à la sortie dudit réseau.

On désigne par « commutateur d'interconnexion » un commutateur dont aucun port n'est utilisé comme accès d'entrée ou de sortie du réseau, c'est-à-dire dont chaque port est soit connecté à un autre commutateur du réseau, soit non utilisé.

On désigne également par « ligne » une suite de commutateurs d'interconnexion reliés entre eux par des éléments de liaison. En d'autres termes, une ligne comporte un commutateur d'interconnexion relié à un autre commutateur d'interconnexion, lui-même éventuellement (si le nombre de commutateurs d'interconnexion de cette ligne est supérieur à deux) relié à un autre commutateur d'interconnexion, etc.

On désigne par « lien » un élément de liaison ou plusieurs éléments de liaison mis bout à bout, sans commutateurs intermédiaires.

On dit que deux commutateurs sont « reliés » lorsque qu'il existe un chemin possible entre ces deux commutateurs. Ce chemin possible peut être direct (par l'intermédiaire d'un lien, on dira également que lesdits commutateurs sont « connectés »), ou indirect par l'intermédiaire d'autres commutateurs. On note qu'il s'agit d'un chemin possible, c'est-à-dire défini indépendamment de l'état de chaque commutateur de ce chemin, il suffit qu'un état de chaque commutateur permette le routage d'un signal d'une extrémité à l'autre de ce chemin possible.

Un réseau 1 selon l'invention comporte un ou plusieurs étages de commutateurs. Chaque étage du réseau comporte une paire de lignes de commutateurs d'interconnexion. En outre ledit chaque étage comporte des bras transversaux reliant des commutateurs d'interconnexion de lignes différentes de cet étage.

Un bras transversal est constitué d'éléments distincts des éléments des autres bras transversaux, c'est-à-dire n'appartenant à aucun autre bras transversal. Un bras transversal est en outre constitué d'éléments distincts des lignes de la paire de lignes de l'étage. Les éléments constitutifs d'un bras transversal sont au moins deux liens et un commutateur, dit « commutateur transversal ». De manière plus générale, un bras transversal est constitué de K (K ≥ 1) commutateurs transversaux et de (K+1) liens pour connecter les commutateurs transversaux entre eux et pour les connecter aux commutateurs d'interconnexion formant les extrémités de ce bras transversal.

Au moins deux commutateurs transversaux de bras transversaux différents de chaque étage sont des commutateurs de connexion du réseau 1, c'est-à-dire qu'ils comportent des ports utilisés comme accès d'entrée et/ou un accès de sortie dudit réseau. De préférence, tous les commutateurs de connexion du réseau sont des commutateurs transversaux, c'est-à-dire que les commutateurs de connexion sont préférentiellement tous placés sur des bras transversaux du réseau 1.

Il est à noter cependant que rien n'exclut d'inclure un réseau selon l'invention dans un réseau de commutateurs plus complexe. Dans un tel cas, le réseau selon l'invention constituerait un sous-réseau du réseau plus complexe, et on comprend que les commutateurs de connexion dudit réseau plus complexe pourraient ne pas être tous placés sur des bras transversaux du sous-réseau selon l'invention.

Dans la suite de la description, on se place dans le cas où tous les commutateurs du réseau 1 sont organisés en étages tels que décrits précédemment, c'est-à-dire que chaque étage comporte une paire de lignes de commutateurs d'interconnexion et des bras transversaux reliant des commutateurs d'interconnexion de lignes différentes de même étage. On se place en outre dans le cas où tous les commutateurs de connexion du réseau sont des commutateurs transversaux.

De préférence, un commutateur d'interconnexion d'une ligne d'un étage n'est relié, par un ou des bras transversaux, qu'à un autre commutateur d'interconnexion de l'autre ligne de cet étage.

On verra par la suite qu'une telle configuration logique du réseau présente de nombreux avantages. En particulier, on verra qu'une telle configuration logique permet, à partir d'un réseau donné, de concevoir facilement un réseau plus grand, et permet également une implantation simple, réalisable de façon modulaire.

Les figures 3 à 7 représentent schématiquement des exemples de réalisation de réseaux 1 de commutateurs selon l'invention. Sur ces figures les commutateurs sont représentés schématiquement par des cercles, les commutateurs d'interconnexion étant en outre hachurés. Les liens (guides d'ondes, câbles coaxiaux, etc.) entre commutateurs sont représentés par des traits pleins. Dans ces figures, des références identiques désignent des éléments identiques ou analogues.

### Exemples de réalisation d'un réseau à un étage

La figure 3 représente un premier exemple de réalisation d'un réseau 1 comportant un étage E₁ de commutateurs.

Tel qu'illustré par la figure 3, l'étage E₁ comporte une paire de lignes de commutateurs d'interconnexion, respectivement L₁ et L₂. Dans cet exemple non limitatif, chaque ligne L₁, L₂ comporte deux commutateurs d'interconnexion désignés par ci₁₁ et ci₁₂ pour la ligne L₁, par ci₂₁ et ci₂₂ pour la ligne L₂.

Du point de vue du nombre de lignes (deux) et du nombre de commutateurs d'interconnexion (deux par ligne), le réseau 1 illustré par la figure 3 correspond à une configuration minimale d'un réseau selon l'invention.

Le réseau 1 de la figure 3 comporte, reliant les commutateurs d'interconnexion des deux lignes L₁ et L₂, quatre bras transversaux :
- deux bras transversaux B₁₁ et B₁₂ entre le commutateur d'interconnexion ci₁₁ et le commutateur d'interconnexion ci₂₁ ;
- deux bras transversaux B₂₁ et B₂₂ entre le commutateur d'interconnexion ci₁₂ et le commutateur d'interconnexion ci₂₂.

Les bras transversaux B₁₁, B₁₂, B₂₁ et B₂₂ comportent chacun deux commutateurs transversaux, désignés dans chacun de ces liens par ct₁ et ct₂.

Le réseau comporte également deux liens connectant des commutateurs d'interconnexion de lignes différentes, dits « liens inter-lignes » IL₁, IL₂. Le lien inter-lignes IL₁ connecte les commutateurs d'interconnexion ci₁₁ et ci₂₁, et le lien inter-lignes IL₂ connecte les commutateurs d'interconnexion ci₁₂ et ci₂₂ du réseau 1.

Dans l'exemple représenté sur la figure 3, tous les commutateurs transversaux sont des commutateurs de connexion. En effet, chaque commutateur transversal ct₁, ct₂ comporte deux ports disponibles, c'est-à-dire deux ports non utilisés pour former le bras transversal de ce commutateur transversal (c'est-à-dire non connecté à un commutateur d'interconnexion ou à un commutateur transversal de ce même bras transversal). Les deux ports disponibles de chaque commutateur transversal sont utilisés respectivement comme accès d'entrée (représenté par une flèche entrante vers le commutateur transversal considéré) et comme accès de sortie (représenté par une flèche sortante depuis le commutateur transversal considéré) du réseau 1. Le nombre N d'accès d'entrée et le nombre M d'accès de sortie du réseau 1 de la figure 3 sont tous deux égaux au nombre de commutateurs transversaux dudit réseau, soit huit.

Un tel réseau, comportant autant d'accès d'entrée que d'accès de sortie est dit « réseau symétrique ». On comprend cependant qu'un tel réseau symétrique présente un intérêt limité dans la mesure où la flexibilité offerte est limitée, notamment du fait que le nombre de commutateurs d'interconnexion est très inférieur au nombre N d'accès d'entrée et M d'accès de sortie.

Toutefois, un tel réseau peut servir de base pour la conception d'autres réseaux plus complexes, en particulier des réseaux asymétriques avec N différent de M. Par exemple il est possible de connecter certains commutateurs transversaux entre eux par des liens, dits « liens inter-bras » IB, ne comportant pas de commutateur. Il est également possible de ne pas utiliser certains ports disponibles, c'est-à-dire de ne pas le considérer comme accès d'entrée ou de sortie du réseau et de ne pas le connecter à un autre commutateur du réseau 1. On comprend donc que le nombre d'accès d'entrée et/ou d'accès de sortie sera ainsi modifié, et que certains commutateurs transversaux du réseau pourront ne plus être des commutateurs de connexion.

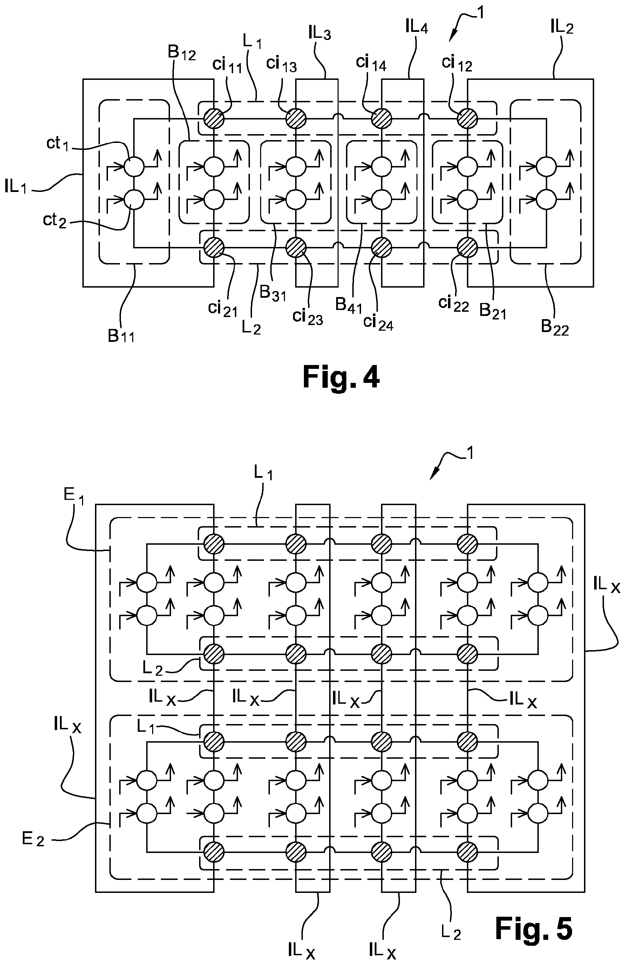

La figure 4 représente un second exemple de réalisation d'un réseau 1 comportant un seul étage E₁.

Par rapport au réseau représenté sur la figure 3, le réseau de la figure 4 a été étendu longitudinalement, c'est-à-dire par ajout de commutateurs d'interconnexion sur chacune des lignes L₁ et L₂, et de bras transversaux entre ces lignes.

On constate que cette extension longitudinale peut être obtenue en intercalant, entre des commutateurs d'interconnexion de chaque ligne, un ou plusieurs motifs élémentaires. Chaque motif élémentaire consiste par exemple en un ensemble formé par les commutateurs transversaux d'un bras transversal, les deux commutateurs d'interconnexion formant les extrémités de ce bras transversal, et les liens qui connectent lesdits commutateurs transversaux entre eux et aux commutateurs d'interconnexion.

Dans l'exemple illustré par la figure 4, on a intercalé, entre les commutateurs d'interconnexion ci₁₁ et ci₁₂ d'une part, ci₂₁ et ci₂₂ d'autre part, deux tels motifs élémentaires :
- un premier motif élémentaire consistant en deux commutateurs d'interconnexion ci₁₃ (sur la ligne L₁) et ci₂₃ (sur la ligne L₂), et deux commutateurs transversaux ct₁ et ct₂ d'un bras transversal B₃₁ ;
- un second motif élémentaire consistant en deux commutateurs d'interconnexion ci₁₄ (sur la ligne L₁) et ci₂₄ (sur la ligne L₂), et deux commutateurs transversaux ct₁ et ct₂ d'un bras transversal B₄₁.

En outre, les commutateurs d'interconnexion ci₁₃ et ci₂₃ sont reliés par un lien inter-lignes IL₃, et les commutateurs d'interconnexion ci₁₄ et ci₂₄ sont reliés par un lien inter-lignes IL₄.

On comprend que, d'un point de vue configuration logique, la conception d'un étage plus grand est simple, et consiste essentiellement en l'ajout de motifs élémentaires et de liens. D'un point de vue implantation, ces motifs pourront également faire l'objet de modules préfabriqués, qui seront plus faciles à installer.

Comme dans le cas du réseau de la figure 3, le réseau 1 de la figure 4 est symétrique et chacun de ses commutateurs transversaux est un commutateur de connexion qui comporte à la fois un accès d'entrée et un accès de sortie. Tel qu'indiqué précédemment, un tel réseau symétrique de préférence utilisé comme réseau de base pour concevoir des réseaux plus complexes, par exemple en reliant certains commutateurs transversaux entre eux par des liens inter-bras IB et/ou en n'utilisant pas certains des ports disponibles.

Il est à noter que, dans chacun des exemples représentés sur les figures 3 et 4, un commutateur d'interconnexion d'une ligne de l'étage E₁ n'est relié, par des bras transversaux et des liens inter-lignes, qu'à un commutateur d'interconnexion de l'autre ligne de cet étage. Une telle configuration logique correspond à un mode préféré de réalisation.

Ces exemples ne sont pas limitatifs de l'invention. On comprend notamment que, dans l'exemple de la figure 3, les liens inter-lignes IL₁ et IL₂, qui ne comportent pas de commutateur, pourraient relier les commutateurs d'interconnexion ci₁₁, ci₂₂ pour le lien inter-lignes IL₁, et ci₁₂, ci₂₁ pour le lien inter-lignes IL₂.

Toutefois, il est à noter qu'il est avantageux de ne relier, par des bras transversaux et des liens inter-lignes, chaque commutateur d'interconnexion d'une ligne d'un étage qu'à un commutateur d'interconnexion de l'autre ligne de cet étage. En effet, l'installation du réseau s'en trouve simplifiée dans la mesure où cela permet d'éviter au maximum des croisements entre liens, croisements qui nécessitent d'avoir des éléments de liaison (guides d'ondes, câbles coaxiaux, etc.) qui se chevauchent et ont par conséquent une géométrie plus complexe.

Dans les exemples représentés sur les figures 3 et 4, tous les ports de chaque commutateur d'interconnexion sont connectés à un commutateur d'interconnexion de l'autre ligne ou à un commutateur transversal.

D'autres exemples sont possibles. Par exemple, rien n'exclut, dans l'exemple représenté sur la figure 4, de ne pas réaliser les bras transversaux B₁₁ et B₂₂. Les ports disponibles des commutateurs d'interconnexion placés aux extrémités des lignes L₁ et L₂ peuvent ne pas être utilisés, ou être utilisés pour connecter entre eux les commutateurs d'interconnexion aux extrémités d'une même ligne, par un lien, dit « lien intra-ligne ». De préférence, au moins un commutateur d'interconnexion d'une ligne de l'étage E₁ est relié à au moins un commutateur d'interconnexion de l'autre ligne de cet étage par au moins un bras transversal et un lien inter-lignes.

De manière plus générale, le nombre de commutateurs transversaux peut ne pas être le même d'un bras transversal à l'autre. Rien n'exclut par exemple d'avoir un ou des bras transversaux avec chacun un commutateur transversal, un ou des bras transversaux avec chacun deux commutateurs transversaux, etc. Dans un tel cas, l'extension d'un étage peut se faire en choisissant un motif élémentaire parmi un ensemble fini de motifs élémentaires, correspondant aux différentes configurations de bras transversaux.

Le cas où chaque bras transversal comporte exactement deux commutateurs transversaux constitue cependant un mode préféré de réalisation, car dans ce cas chaque commutateur transversal est connecté à un commutateur d'interconnexion. En outre, le nombre de commutateurs transversaux de chaque bras transversal étant prédéfini, le réseau sera principalement constitué de modules préfabriqués identiques, auquel on ajoutera des liens et éventuellement des commutateurs transversaux additionnels à relier aux commutateurs d'interconnexion formant les extrémités des lignes L₁, L₂ (les commutateurs transversaux des bras transversaux B₁₁ et B₂₂ sur les figures 3 et 4).

### Exemples de réalisation d'un réseau à deux étages

Dans la suite de la description d'exemples de réalisation d'un réseau à deux étages, on se place de manière non limitative dans le cas où chaque bras transversal comporte exactement deux commutateurs transversaux, et où tous les ports des commutateurs d'interconnexion sont utilisés par des bras transversaux ou des liens inter-lignes.

La figure 5 représente un premier exemple de réalisation d'un réseau à deux étages E₁ et E₂.

Dans son principe, chaque étage du réseau 1 de la figure 5 correspond à l'étage du réseau 1 de la figure 4, auquel on a supprimé les liens inter-lignes IL₁, IL₂, IL₃, IL₄, qui ont été remplacés par des liens inter-lignes IL_{X} qui connectent entre eux des commutateurs d'interconnexion d'étages E₁, E₂ différents.

Dans l'exemple de la figure 5, l'étage E₁ comporte deux lignes L₁ et L₂, et l'étage E₂ comporte deux lignes, également désignées par L₁ et L₂. Chaque commutateur d'interconnexion de la ligne L₁ de l'étage E₁ est connecté, par un lien inter-lignes IL_{X}, à un commutateur d'interconnexion de la ligne L₂ de l'étage E₂. Chaque commutateur d'interconnexion de la ligne L₂ de l'étage E₁ est également connecté, par un lien inter-lignes ILₓ, à un commutateur d'interconnexion de la ligne L₁ de l'étage E₂.

De tels liens inter-lignes ILₓ, en particulier ceux qui, le réseau étant implanté, connectent les commutateurs d'interconnexion de lignes non adjacentes du réseau 1 (ligne L₁ de l'étage E₁ et ligne L₂ de l'étage E₂), permettent de router un signal d'un bout à l'autre du réseau tout en limitant le nombre de commutateurs traversés et les pertes d'insertion associées.

De manière plus générale, il est à noter que rien n'exclut, dans le cas d'un réseau comportant au moins deux étages E₁, E₂, de considérer un nombre inférieur de liens inter-lignes IL_{X} connectant des commutateurs d'interconnexion d'étages différents. Toutefois, lorsque le réseau comporte au moins deux étages, au moins un commutateur d'interconnexion d'un étage doit être connecté à un commutateur d'interconnexion d'un autre étage par un lien inter-lignes IL_{X}, de sorte à permettre l'établissement de chemins entre ces étages. On comprend que, en augmentant le nombre de liens inter-lignes IL_{X}, on augmente également le nombre de chemins pouvant être établis simultanément entre les étages, améliorant ainsi la flexibilité offerte par le réseau 1.

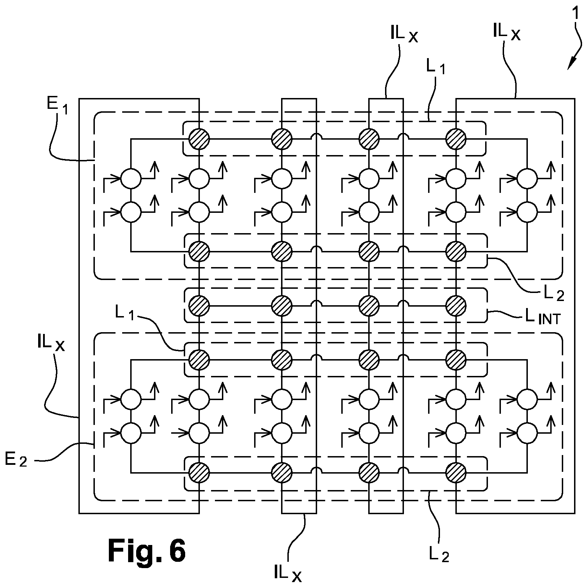

La figure 6 représente un autre exemple de réalisation d'un réseau 1 comportant deux étages E₁ et E₂. Dans cet exemple, le réseau 1 comporte entre lesdits deux étages, une ligne de commutateurs d'interconnexion, dite « ligne intermédiaire » L_{INT}, distincte desdits deux étages et par l'intermédiaire de laquelle les commutateurs d'interconnexion de la ligne L₂ de l'étage E₁ et de la ligne L₁ de l'étage E₂ sont reliés.

Du fait de la ligne intermédiaire L_{INT} entre les étages E₁ et E₂, le nombre de chemins pouvant être établis simultanément entre les étages est augmenté. Rien n'exclut de considérer plusieurs lignes intermédiaires entre les étages E₁ et E₂, connectées entre elles, afin d'augmenter encore le nombre de chemins pouvant être établis simultanément entre les étages.

Dans l'exemple représenté sur la figure 6, et de manière nullement limitative, deux commutateurs d'interconnexion de la ligne intermédiaire L_{INT}, désignés tous deux par ci_{INT}, comportent un port non utilisé. Ces deux ports sont, dans d'autres exemples non représentés sur les figures, connectés par un lien intra-ligne.

De manière plus générale, l'invention n'est pas limitée à deux étages, et on comprend que, suivant d'autres exemples, le réseau 1 comporte trois étages ou plus, reliés entre eux conformément à l'une quelconque des solutions décrites en référence aux figures 5 et 6. Rien n'exclut, dans un même réseau, d'avoir des paires d'étages reliés entre eux de façon différente, par exemple deux étages reliés par l'intermédiaire d'au moins une ligne intermédiaire L_{INT} et deux étages reliés directement, tel que décrit en référence à la figure 5.

Les réseaux illustrés par les figures 5 et 6 sont des réseaux symétriques, dont chaque commutateur transversal comporte un accès et un accès de sortie. Par conséquent N et M sont tous deux égaux au nombre de commutateurs transversaux.

Tel qu'indiqué précédemment en référence aux figures 3 et 4, de tels réseaux symétriques servent avantageusement de base à la conception de réseaux plus complexes, par exemple en ajoutant des liens inter-bras et/ou en laissant des ports disponibles inutilisés. Le cas échéant, les liens inter-bras connectent des commutateurs transversaux d'un même étage et/ou d'étages différents.

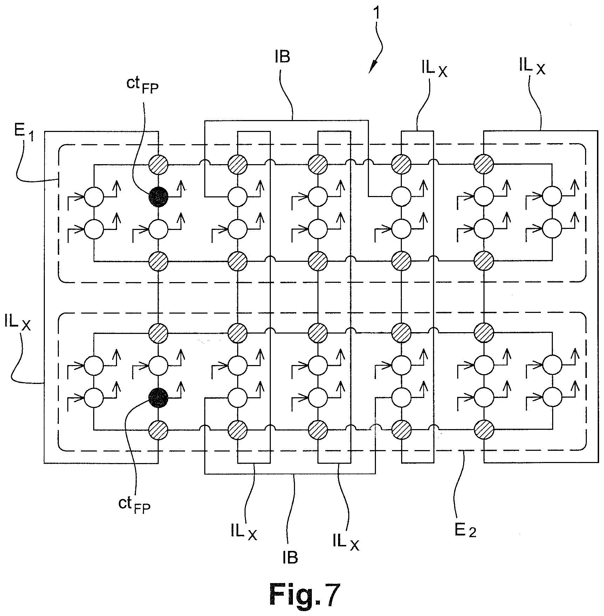

La figure 7 représente un exemple de réalisation d'un réseau 1 comportant un nombre N d'accès d'entrée égal à 22 et un nombre M d'accès de sortie égal à 28, permettant par exemple d'avoir 28 transpondeurs en tout dont 6 sont des transpondeurs redondants.

Le réseau 1 de la figure 7 comporte deux étages E₁ et E₂. Chaque ligne du réseau 1 comporte cinq commutateurs d'interconnexion, et chaque étage E₁, E₂ comporte sept bras transversaux comportant chacun deux commutateurs transversaux ct₁ et ct₂, et chaque commutateur d'interconnexion est connecté à un commutateur d'interconnexion d'un autre étage par un lien inter-lignes IL_{X}.

Le réseau 1 de la figure 7 comporte donc un total de 28 commutateurs transversaux. Afin d'obtenir 22 accès d'entrée et 28 accès de sortie, certains commutateurs transversaux ont été connectés entre eux, et certains ports de commutateurs transversaux sont inutilisés. En partant d'un réseau symétrique dans lequel chaque commutateur transversal comportait deux ports disponibles pour un accès d'entrée et un accès de sortie, on a connecté individuellement deux des accès d'entrée à deux autres accès d'entrée d'autres commutateurs transversaux, par deux liens inter-bras IB. Dans l'exemple représenté, il s'agit de liens inter-bras IB entre commutateurs transversaux d'un même étage E₁, E₂. En outre, deux accès d'entrée de deux autres commutateurs transversaux, désignés par ct_{FP} et représentés avec un remplissage noir sur la figure 7, sont inutilisés.

Il est à noter que les positions, dans la matrice de commutateurs transversaux du réseau 1, des commutateurs transversaux ct_{FP} et des commutateurs transversaux reliés par les liens inter-bras IB, ne sont pas nécessairement toutes équivalentes en termes de flexibilité du réseau obtenu. Ces positions sont par exemple choisies en évaluant, par simulation ou tout autre moyen à la portée de l'homme du métier, les performances offertes par différentes configurations logiques correspondant à des positions différentes de ces commutateurs transversaux. Les performances d'une configuration donnée sont par exemple évaluées en termes de flexibilité, et/ou de nombre moyen de commutateurs traversés, etc.

Il a été constaté, lors de la mise en oeuvre de réseaux de commutateurs selon l'invention, que d'excellentes performances pouvaient être atteintes, en termes de flexibilité et de nombre de commutateurs traversés, avec un nombre total de commutateurs restreint, inférieur au nombre de commutateurs des réseaux décrits dans l'art antérieur, y compris pour des réseaux asymétriques. De tels réseaux permettent donc d'assurer à la fois redondance et flexibilité.

De plus, la présente invention présente également de nombreux avantages pour l'installation du réseau de commutateurs.

En effet, les lignes L₁, L₂ de commutateurs d'interconnexion du réseau 1 sont de préférence implantées sensiblement droites et sensiblement parallèles suivant une direction, dite « direction longitudinale » dudit réseau.

De préférence, les bras transversaux sont implantés, entre les lignes L₁, L₂, sensiblement droits et sensiblement parallèles suivant une direction, dite « direction transversale », non parallèle à la direction longitudinale, formant avec ladite direction longitudinale un angle préférentiellement droit.

Toutefois, lorsque deux commutateurs d'interconnexion sont reliés par deux bras transversaux, seul l'un de ces bras transversaux est implanté suivant la direction transversale. L'autre bras transversal (par le bras transversal B₁₁ ou B₂₂ des figures 3 et 4) n'est pas implanté entre les lignes et n'est pas implanté sensiblement droit ; toutefois les commutateurs transversaux de ce bras transversal sont de préférence alignés suivant un axe sensiblement parallèle à la direction transversale.

Une telle implantation est par exemple obtenue au moyen de modules préfabriqués correspondant aux motifs élémentaires susmentionnés, ou à des motifs élémentaires plus complexes. De préférence, les modules préfabriqués pourront également inclure les éléments de liaison entre commutateurs du motif élémentaire. En intégrant les éléments de liaison dans les modules préfabriqués, le réseau obtenu sera en général plus compact que s'il avait été fabriqué en installant préalablement les commutateurs et en installant ensuite les éléments de liaison les connectant.

De plus, avec une telle implantation, les éléments de liaison entre modules préfabriqués pourront être majoritairement courts et sensiblement droits. La plupart de ces éléments de liaison auront sensiblement la même géométrie.

De fait, la plupart des éléments de liaison ont une géométrie utilisable à plusieurs endroits du réseau, l'essentiel des liens du réseau pouvant être fabriqué avec un nombre limité de géométries différentes des éléments de liaison. En pratique, seuls les liens inter-bras ont une géométrie spécifique, non utilisable à plusieurs endroits du réseau, et par conséquent fabriqués sur mesure. Toutefois, ces liens inter-bras sont généralement en nombre limité.

En outre, la conception d'un nouveau réseau bénéficiera largement des réalisations antérieures, dans la mesure où, d'un point de vue logique, l'extension d'un réseau existant se fait simplement par l'ajout de motifs élémentaires au sein d'un étage et/ou par l'ajout d'un ou de plusieurs étages. Le choix d'étendre le réseau longitudinalement (par l'ajout de motifs élémentaires) et/ou transversalement (par l'ajout d'étages) pourra tenir compte des dimensions de la structure d'accueil sur laquelle le réseau doit être installé.

## Revendications

1. Réseau (1) de commutateurs comportant N accès d'entrée et M accès de sortie, chacun desdits commutateurs comportant quatre ports et les accès d'entrée et de sortie du réseau étant des ports de commutateurs, dits «commutateurs de connexion », **caractérisé en ce que** le réseau (1) comporte au moins un étage (E₁,E₂) de commutateurs, chaque étage (E₁,E₂) de commutateurs comportant :
- une paire de lignes (L₁,L₂) de commutateurs dont les ports ne sont pas utilisés comme accès d'entrée ou de sortie du réseau, dits « commutateurs d'interconnexion », une ligne étant une suite de commutateurs d'interconnexion connectés entre eux,
- des bras transversaux reliant des commutateurs d'interconnexion de lignes différentes du même étage, un bras transversal étant constitué d'éléments distincts de ceux des autres bras transversaux de l'étage, un bras transversal comprenant au moins deux liens et un commutateur, dit « commutateur transversal »,
et **en ce qu'**au moins deux commutateurs transversaux (ct₁,ct₂) de bras transversaux différents de chaque étage (E₁,E₂) sont des commutateurs de connexion du réseau (1), et **en ce qu'**au moins un commutateur d'interconnexion d'une ligne (L₁,L₂) d'un étage (E₁,E₂) du réseau est connecté à un commutateur d'interconnexion de l'autre ligne du même étage ou d'une autre ligne d'un autre étage du réseau (1), par un lien ne comportant pas de commutateur, dit « lien inter-lignes » (IL₁, ILₓ).

2. Réseau (1) selon la revendication 1, **caractérisé en ce que** chaque commutateur d'interconnexion d'une ligne (L₁,L₂) d'un étage (E₁,E₂) est connecté, par un lien inter-lignes, à un commutateur d'interconnexion de l'autre ligne du même étage ou d'une autre ligne d'un autre étage du réseau (1).

3. Réseau (1) selon l'une des revendications précédentes, **caractérisé en ce que**, ledit réseau comportant au moins deux étages (E₁,E₂), tous les commutateurs d'interconnexion d'une ligne (L₁,L₂) d'un étage (E₁,E₂) sont connectés à des commutateurs d'interconnexion respectifs d'une autre ligne d'un autre étage du réseau.

4. Réseau (1) selon l'une des revendications précédentes, **caractérisé en ce que** ledit réseau comporte au moins deux étages (E₁,E₂) et au moins une ligne de commutateurs d'interconnexion, dite « ligne intermédiaire » (L_{INT}), et **en ce que** tous les commutateurs d'interconnexion d'une ligne (L₁,L₂) d'un étage (E₁,E₂) sont connectés à des commutateurs d'interconnexion respectifs d'une autre ligne d'un autre étage du réseau par l'intermédiaire de commutateurs d'interconnexion respectifs de ladite au moins une ligne intermédiaire (L_{INT}).

5. Réseau (1) selon l'une des revendications précédentes, **caractérisé en ce que** chaque commutateur d'interconnexion de chaque ligne (L₁,L₂) de chaque étage (E₁,E₂) est connecté à un commutateur d'interconnexion d'une autre ligne du réseau par un lien inter-lignes.

6. Réseau (1) selon l'une des revendications précédentes, **caractérisé en ce que** tous les commutateurs d'interconnexion d'une ligne (L₁,L₂) d'un étage (E₁,E₂) sont reliés par des bras transversaux respectifs à des commutateurs d'interconnexion respectifs de l'autre ligne du même étage.

7. Réseau (1) selon l'une des revendications précédentes, **caractérisé en ce que** chaque commutateur d'interconnexion d'une ligne (L₁,L₂) d'un étage (E₁,E₂) n'est relié, par un ou des bras transversaux, qu'à un autre commutateur d'interconnexion de l'autre ligne du même étage.

8. Réseau (1) selon l'une des revendications précédentes, **caractérisé en ce que** tous les commutateurs de connexion du réseau sont des commutateurs transversaux (ct_{1,}ct₂) dudit réseau.

9. Réseau (1) selon l'une des revendications précédentes, **caractérisé en ce que** chaque bras transversal d'au moins un étage (E₁,E₂) comporte exactement deux commutateurs transversaux.

10. Réseau (1) selon l'une des revendications précédentes, **caractérisé en ce qu'**au moins un commutateur transversal (ct₁,ct₂) est connecté à un commutateur transversal d'un autre bras transversal du réseau par un lien ne comportant pas de commutateurs, dit « lien inter-bras » (IB).

11. Réseau (1) selon l'une des revendications précédentes, **caractérisé en ce qu'**au moins un port d'au moins un commutateur transversal (ct₁,ct₂) n'est ni connecté à un autre commutateur du réseau (1), ni utilisé comme accès d'entrée ou accès de sortie dudit réseau.

12. Réseau (1) selon l'une des revendications précédentes, **caractérisé en ce que** les commutateurs d'interconnexion placés aux extrémités d'au moins une ligne (L₁,L₂) d'un étage (E₁,E₂) sont connectés entre eux par un lien ne comportant pas de commutateurs, dit « lien intra-ligne ».

13. Réseau (1) selon l'une quelconque des revendications précédentes, **caractérisé en ce que** les lignes (L₁,L₂) de commutateurs d'interconnexion du réseau sont implantées sensiblement droites et sensiblement parallèles entre elles suivant une direction, dite « direction longitudinale » du réseau.

14. Réseau (1) selon la revendication 13, **caractérisé en ce que** les bras transversaux sont implantés, entre les lignes (L₁,L₂) dudit réseau, sensiblement droits et sensiblement parallèles suivant une direction, dite « direction transversale », non parallèle à la direction longitudinale, formant avec ladite direction longitudinale un angle préférentiellement droit.

15. Réseau (1) selon l'une des revendications précédentes, **caractérisé en ce que**, ledit réseau comportant au moins deux étages (E₁,E₂), chaque commutateur d'interconnexion d'une première ligne (L₁,L₂) d'un étage (E₁,E₂) est connecté, par un lien inter-lignes, à un commutateur d'interconnexion d'une seconde ligne d'un autre étage du réseau (1), lesdites première ligne et seconde ligne étant des lignes non adjacentes du réseau implanté.

16. Charge utile de satellite de télécommunications, **caractérisée en ce qu'**elle comporte au moins un réseau (1) de commutateurs selon l'une des revendications précédentes.

## Patentansprüche

1. Netz (1) von Schaltern, umfassend N Eingänge und M Ausgänge, wobei jeder der Schalter vier Anschlüsse umfasst und die Ein- und Ausgänge des Netzes Anschlüsse von Schaltern, sogenannten "Verbindungsschaltern", sind, **dadurch gekennzeichnet, dass** das Netz (1) wenigstens eine Stufe (E₁, E₂) von Schaltern umfasst, wobei jede Stufe (E₁, E₂) von Schaltern umfasst:
- ein Paar von Linien (L₁, L₂) von Schaltern, deren Anschlüsse nicht als Ein- oder Ausgänge des Netzes genutzt werden, sogenannten "Vernetzungsschaltern", wobei eine Linie eine Abfolge von untereinander verbundenen Vernetzungsschaltern ist,
- Vernetzungsschalter von verschiedenen Linien der gleichen Stufe verbindende Querarme, wobei ein Querarm aus von denen der anderen Querarme der Stufe verschiedenen Teilen besteht, wobei ein Querarm wenigstens zwei Verbindungen und einen Schalter, einen sogenannten "Querschalter", umfasst,
und dass wenigstens zwei Querschalter (ct₁, ct₂) von verschiedenen Querarmen von jeder Stufe (E₁, E₂), Verbindungsschalter des Netzes (1) sind, und dass wenigstens ein Vernetzungsschalter einer Linie (L₁, L₂) einer Stufe (E₁, E₂) des Netzes mit einem Vernetzungsschalter der anderen Linie der gleichen Stufe oder einer anderen Linie einer anderen Stufe des Netzes (1) durch eine keinen Schalter umfassende Verbindung, eine sogenannte "Linienzwischenverbindung" (IL₁, ILₓ), verbunden ist.

2. Netz (1) nach Anspruch 1, **dadurch gekennzeichnet, dass** jeder Vernetzungsschalter einer Linie (L₁, L₂) einer Stufe (E1, E2) durch eine Linienzwischenverbindung mit einem Vernetzungsschalter der anderen Linie der gleichen Stufe oder mit einer anderen Linie einer anderen Stufe des Netzes (1) verbunden ist.

3. Netz (1) nach einem der vorhergehenden Ansprüche, **dadurch gekennzeichnet, dass** das Netz wenigstens zwei Stufen (E₁, E₂) umfasst und alle Vernetzungsschalter einer Linie (L₁, L₂) einer Stufe (E₁, E₂) mit jeweiligen Vernetzungsschaltern einer anderen Linie einer anderen Stufe des Netzes verbunden sind.

4. Netz (1) nach einem der vorhergehenden Ansprüche, **dadurch gekennzeichnet, dass** das Netz wenigstens zwei Stufen (E₁, E₂) und wenigstens eine Linie von Vernetzungsschaltern, eine sogenannte "Zwischenlinie" (L_{INT}), umfasst, und dass alle Vernetzungsschalter einer Linie (L₁, L₂) einer Stufe (E₁, E₂) mit jeweiligen Vernetzungsschaltern einer anderen Linie einer anderen Stufe des Netzes durch jeweilige Vernetzungsschalter der wenigstens einen Zwischenlinie (L_{INT}) verbunden sind.

5. Netz (1) nach einem der vorhergehenden Ansprüche, **dadurch gekennzeichnet, dass** jeder Vernetzungsschalter von jeder Linie (L₁, L₂) von jeder Stufe (E₁, E₂) mit einem Vernetzungsschalter einer anderen Linie des Netzes durch eine Linienzwischenverbindung verbunden ist.

6. Netz (1) nach einem der vorhergehenden Ansprüche, **dadurch gekennzeichnet, dass** alle Vernetzungsschalter einer Linie (L₁, L₂) einer Stufe (E₁, E₂) durch jeweilige Querarme mit jeweiligen Vernetzungsschaltern der anderen Linie der gleichen Stufe verbunden sind.

7. Netz (1) nach einem der vorhergehenden Ansprüche, **dadurch gekennzeichnet, dass** jeder Vernetzungsschalter einer Linie (L₁, L₂) einer Stufe (E₁, E₂) durch einen Querarm oder durch Querarme nur mit einem anderen Vernetzungsschalter der anderen Linie der gleichen Stufe verbunden ist.

8. Netz (1) nach einem der vorhergehenden Ansprüche, **dadurch gekennzeichnet, dass** alle Vernetzungsschalter des Netzes Querschalter (ct₁, ct₂) des Netzes sind.

9. Netz (1) nach einem der vorhergehenden Ansprüche, **dadurch gekennzeichnet, dass** jeder Querarm von wenigstens einer Stufe (E₁, E₂) genau zwei Querschalter umfasst.

10. Netz (1) nach einem der vorhergehenden Ansprüche, **dadurch gekennzeichnet, dass** wenigstens ein Querschalter (ct₁, ct₂) mit einem Querschalter eines anderen Querarms des Netzes durch eine keine Schalter umfassende Verbindung, eine sogenannte "Armzwischenverbindung" (IB), verbunden ist.

11. Netz (1) nach einem der vorhergehenden Ansprüche, **dadurch gekennzeichnet, dass** wenigstens ein Anschluss von wenigstens einem Querschalter (ct₁, ct₂) weder mit einem anderen Schalter des Netzes (1) verbunden ist noch als Eingang oder Ausgang des Netzes verwendet wird.

12. Netz (1) nach einem der vorhergehenden Ansprüche, **dadurch gekennzeichnet, dass** die an den Enden von wenigstens einer Linie (L₁, L₂) einer Stufe (E₁, E₂) angeordneten Vernetzungsschalter untereinander durch eine keine Schalter umfassende Verbindung, eine sogenannte "Linienzwischenverbindung", verbunden sind.

13. Netz (1) nach einem der vorhergehenden Ansprüche, **dadurch gekennzeichnet, dass** die Linien (L₁, L₂) von Vernetzungsschaltern des Netzes im Wesentlichen gerade und im Wesentlichen parallel zueinander entsprechend einer Richtung, der sogenannten "Längsrichtung", des Netzes installiert sind.

14. Netz (1) nach Anspruch 13, **dadurch gekennzeichnet, dass** die Querarme zwischen den Linien (L₁, L₂) des Netzes im Wesentlichen gerade und im Wesentlichen parallel entsprechend einer Richtung, der sogenannten "Querrichtung", nicht parallel zur Längsrichtung, die mit der Längsrichtung einen vorzugsweise rechten Winkel bildet, installiert sind.

15. Netz (1) nach einem der vorhergehenden Ansprüche, **dadurch gekennzeichnet, dass** das Netz wenigstens zwei Stufen (E₁, E₂) umfasst und jeder Vernetzungsschalter einer ersten Linie (L₁, L₂) einer Stufe (E₁, E₂) durch eine Linienzwischenverbindung mit einem Vernetzungsschalter einer zweiten Linie einer anderen Stufe des Netzes (1) verbunden ist, wobei die erste Linie und die zweite Linie nicht angrenzende Linien des installierten Netzes sind.

16. Nutzlast von Telekommunikationssatelliten, **dadurch gekennzeichnet, dass** sie wenigstens ein Netz (1) von Schaltern nach einem der vorhergehenden Ansprüche umfasst.

## Claims

1. Network (1) of switches comprising N input accesses and M output accesses, with each of said switches comprising four ports and with the network input and output accesses being switch ports, referred to as "connection switches", **characterized in that** the network (1) comprises at least one stage (E₁,E₂) of switches, each stage (E₁, E₂) of switches comprising:
- a pair of switch lines (L₁,L₂) whose ports are not used as network input or output accesses, referred to as "interconnection switches", a line being a set of interconnection switches connected to one another,
- transverse arms linking interconnection switches of different lines of the same stage, a transverse arm consisting of elements that are separate from those of the other transverse arms of the stage, a transverse arm comprising at least two links and a switch, referred to as "transverse switch",
and **in that** at least two transverse switches (ct₁,ct₂) from different transverse arms of each stage (E₁,E₂) are connection switches of the network (1), and **in that** at least one interconnection switch of a line (L₁,L₂) of a stage (E₁,E₂) of the network is connected to an interconnection switch of the other line of the same stage or of a line of another stage of the network (1), by a link comprising no switch, referred to as "inter-line link" (IL₁,ILₓ).

2. Network (1) according to claim 1, **characterized in that** each interconnection switch of a line (L₁,L₂) of a stage (E₁,E₂) is connected by an inter-line link to an interconnection switch of the other line of the same stage or of another line of another stage of the network (1).

3. Network (1) according to one of the preceding claims, **characterized in that**, with said network comprising at least two stages (E₁,E₂), all the interconnection switches of a line (L₁,L₂) of a stage (E₁,E₂) are connected to respective interconnection switches of another line of another stage of the network.

4. Network (1) according to one of the preceding claims, **characterized in that** said network comprises at least two stages (E₁,E₂), and at least one line of interconnection switches, referred to as "intermediate line" (L_{INT}) and **in that** all the interconnection switches of a line (L₁,L₂) of a stage (E₁,E₂) are connected to respective interconnection switches of another line of another stage of the network by means of respective interconnection switches of said at least one intermediate line (L_{INT}).

5. Network (1) according to one of the preceding claims, **characterized in that** each interconnection switch of each line (L₁,L₂) of each stage (E₁,E₂) is connected to an interconnection switch of another line of the network by an inter-line link.

6. Network (1) according to one of the preceding claims, **characterized in that** all the interconnection switches of a line (L₁,L₂) of a stage (E₁,E₂) are linked by respective transverse arms to respective interconnection switches of the other line of the same stage.

7. Network (1) according to one of the preceding claims, **characterized in that** each interconnection switch of a line (L₁,L₂) of a stage (E₁,E₂) is linked by one or several transverse arms to only one interconnection switch of the other line of the same stage.

8. Network (1) according to one of the preceding claims, **characterized in that** all the connection switches of the network are transverse switches (ct₁,ct₂) of said network.

9. Network (1) according to one of the preceding claims, **characterized in that** each transverse arm of at least one stage (E₁,E₂) comprises exactly two transverse switches.

10. Network (1) according to one of the preceding claims, **characterized in that** at least one transverse switch (ct₁,ct₂) is connected to a transverse switch of another transverse arm of the network by a link comprising no switches, referred to as "inter-arm link" (IB).

11. Network (1) according to one of the preceding claims, **characterized in that** at least one port of at least one transverse switch (ct₁,ct₂) is neither connected to another switch of the network (1), nor used as an input access or output access of said network.

12. Network (1) according to one of the preceding claims, **characterized in that** the interconnection switches placed at the ends of at least one line (L₁,L₂) of a stage (E₁,E₂) are connected to one another by a link comprising no switches, referred to as "intra-line link".

13. Network (1) according to one of the preceding claims, **characterized in that** the lines (L₁, L₂) of interconnection switches of the network are installed substantially straight and substantially parallel to each other along a direction referred to as the "longitudinal direction" of the network.

14. Network (1) according to claim 13, **characterized in that** the transverse arms are installed, between the lines (L₁, L₂) of said network, substantially straight and substantially parallel along a direction referred to as "transverse direction", not parallel to the longitudinal direction, making an angle, preferably a right angle, with said longitudinal direction.

15. Network (1) according to one of the preceding claims, **characterized in that**, said network comprising at least two stages (E₁,E₂), each interconnection switch of a first line (L₁, L₂) of a stage (E₁,E₂) is connected, by an inter-line link, to an interconnection switch of a second line of another stage of the network (1), said first line and second line being non-adjacent lines of the installed network.

16. Telecommunications satellite payload, **characterized in that** it comprises at least one network (1) of switches according to one of the preceding claims.
